# EUROPÄISCHE PATENTSCHRIFT

(11) **EP 2 426 054 B1**
(45) Veröffentlichungstag und Bekanntmachung des Hinweises auf die Patenterteilung: **03.07.2013**
(21) Anmeldenummer: 10405159.4
(22) Anmeldetag: 02.09.2010
(51) Int. Cl.: B65B 23/20, B65B 33/00, B65G 49/06, C09J 7/02

(54) **Verfahren und Anordnung zum Abdecken einer Platte mit Schutzfolie**
Method and assembly for covering a board with protective film
Procédé et agencement de recouvrement d'une plaque avec une feuille de protection

(43) Veröffentlichungstag der Anmeldung: 07.03.2012
(73) Patentinhaber: Glas Trösch Holding AG, 3001 Bern (CH)
(72) Erfinder: Bernhard, Rudolf, 4922 Bützberg (CH); Lanz, Daniel, 4924 Obersteckholz (CH)
(74) Vertreter: Rüfenacht, Philipp Michael

(56) Entgegenhaltungen:
- DE-A1- 4 237 887
- DE-U1- 20 021 738
- JP-A- 7 081 959
- JP-A- 2002 127 311

## Beschreibung

### Technishes Gebiet

Die Erfindung betrifft ein Verfahren und eine Anordnung zum Abdecken einer Platte, insbesondere eines Isolierglaselements, mit Schutzfolie.

### Stand der Technik

Nach der Herstellung von Isolierglaselementen oder anderen Platten ist es erwünscht, die Oberflächen vor Beschädigungen zu schützen, welche beim Transport der Platten, beim Einsatz des Isolierglaselements in einen Fensterrahmen, oder nach dem Einbau von Fenstern in einen Rohbau entstehen können. Bei im Rohbau eingesetzten Fenstern müssen insbesondere die Glasoberflächen vor Verätzungen durch Kalk, Verputze oder ähnliche aggressive Stoffe geschützt werden. Auch sollen die Oberflächen vor mechanischen und thermischen Einflüssen wie beispielsweise Schmirgelstaub und Schweissspritzern geschützt sein.

Im Stand der Technik ist das Abdecken von Glasoberflächen durch eine entfernbare Schutzfolie bekannt. Die entfernbare Schutzfolie weist auf der einen Seite eine Klebeschicht auf, welche eine ausreichende Haftung der Schutzfolie auf der Glasoberfläche gewährleistet. Wegen der einfacheren Zugänglichkeit werden die Glasoberflächen typischerweise vor dem Einbau des Isolierglaselements in den Fensterrahmen abgedeckt. Dabei wird zunächst die gesamte Glasoberfläche mit der Schutzfolie abgedeckt und es wird danach in einem Rahmenbereich des Isolierglaselements die Schutzfolie weggeschnitten, um nach der Fertigstellung des Bauwerks ein einfaches Entfernen der Schutzfolie von der Glasoberfläche des Fensters zu ermöglichen. Falls die Schutzfolie bis zum Rand des Isolierglaselements belassen wird, ist das Abziehen der Schutzfolie viel schwieriger, weil ein Teil der Schutzfolie im Fensterrahmen eingeklemmt ist und deshalb die Schutzfolie entlang dem Fensterrahmen durchtrennt oder zerrissen werden muss, um diese zu entfernen.

Da die verschiedenen Bauphasen eines Bauwerks einen längeren Zeitraum in Anspruch nehmen, muss eine verlässliche Haftung der Schutzfolie während mindestens 6 Monaten gewährleistet sein, und zwar auch in einer Umgebung mit veränderlichen klimatischen Bedingungen wie UV-Strahlung, Hitze, Regen, Schnee oder Trockenheit. Zugleich darf die Haftkraft der Schutzfolie auf dem Isolierglaselement nicht zu gross sein, um das rückstandfreie Abziehen der Schutzfolie nach der Fertigstellung des Bauobjekts nicht unnötig zu erschweren. Um diese gegensätzlichen Randbedingungen zu erfüllen, ist insbesondere eine sorgfältige Applikation der Schutzfolie auf dem Isolierglaselement erforderlich.

Die US 5,599,422 (Oregon Glass Company) und die davon abgeleitete US 5,866,260 (Oregon Glass Company) zeigen das Abdecken eines Fensterglases, welches in einem Rahmen installiert wird, bevor der Rahmen gefärbt oder sonst behandelt wird. Eine Vorrichtung zum beidseitigen Abdecken von Fenstergläsern umfasst Förderrollen und Speicherrollen mit Abdeckmaterial, welches mittels Quetschrollen auf die Oberfläche der Fenstergläser angebracht wird. Schneideinrichtungen sind vorgesehen, um das Abdeckmaterial entlang einem Randbereich zu durchtrennen, wonach das Abdeckmaterial anschliessend von Hand oder mittels einer automatischen Vorrichtung vom Randbereich entfernt wird.

Die US 7,026,571 (Cardinal IG Company) und die davon abgeleitete US 2006/0127612 (Cardinal IG Company) zeigen Verfahren um ein Fensterglas abzudecken, wobei ein Randbereich freigelassen wird, um eine bessere Halterung des Fensterglases in einem Fensterrahmen zu ermöglichen. Ein Abdeckungsmaterial wird auf dem Fensterglas aufgebracht und mit einem Laserstrahl entlang einer geschlossenen Linie durchtrennt, sodass nach dem Abziehen von Abdeckungsmaterial ein Randbereich des Fensterglases freigelegt ist. Eine Produktionslinie ist eingerichtet, um Fenstergläser auf Transportrollen zu transportieren, mit Schutzfolie zu überziehen und Bereiche der Schutzfolie durch einen Laser und eine Abzugsvorrichtung zu entfernen.

Die im Stand der Technik bekannten Vorrichtungen zum Abdecken einer Glasoberfläche mit einer Schutzfolie sind für eine Verarbeitung von Isolierglaselementen einer bestimmten Grösse eingerichtet. Sobald Isolierglaselemente einer anderen Grösse mit einer Schutzfolie überzogen werden sollen, müssen im Stand der Technik bekannte Vorrichtungen immer zuerst abgeändert oder neu gebaut werden. Eine Vorrichtung zur Applikation einer Schutzfolie auf Isolierglaselemente unterschiedlicher Dimensionen ist im Stand der Technik nicht bekannt. Zudem ist im Stand der Technik nach dem Abdecken des Fensterglases mit einer Schutzfolie ein separater Bearbeitungsschritt vorgesehen, um die Schutzfolie von einem Randbereich des Fensterglases zu entfernen und das Fensterglas für den Einbau in einen Fensterrahmen vorzubereiten. Die entfernte Schutzfolie wird dabei weggeworfen.

Die JP 7 081959 (Nippon Sheet Glass) betrifft das Zerschneiden einer Glasscheibe mit einem Schutzfilm, wobei auf der Glasscheibe ein Schutzfilm angebracht ist. Die Breite des Films ist schmaler als die Breite der Scheibe und die beiden Filme sind so angeordnet, dass eine Überlappung besteht. Der Schutzfilm wird zunächst mit einem Rollenschneider durchtrennt.

### Darstellung der Erfindung

Aufgabe der Erfindung ist es, ein dem eingangs genannten technischen Gebiet zugehörendes Verfahren und eine Anordnung zum Abdecken einer Platte, insbesondere eines Isolierglaselements, mit Schutzfolle zu schaffen, welche Oberflächen mit weniger Verschnitt abdecken.

Die Lösung der Aufgabe ist durch die Merkmale der Ansprüche 1 und 5 definiert. Gemäss dem erfindungsgemässen Verfahren werden mehrere Schutzfolien in Folienbahnen unterschiedlicher Breite auf der Platte überlappend appliziert. Erfindungsgemäss sind mehrere Folienapplikationsvorrichtungen gegenüber der Platte quer und längs verschiebbar gelagert, um mehrere Folienbahnen mit entfernbarer Schutzfolie unterschiedlicher Breite auf der Platte überlappend zu applizieren.

Die Platte kann insbesondere ein zwei- oder mehrfaches Isolierglaselement sein.

Als Schutzfolie kann eine Kunststofffolie aus PP (Polypropylen), Polyester, PVC (Polyvinylchlorid), PE (Polyäthylen), LDPE (Low-Density PE), HDPE (High-Density PE) oder irgendeine andere Kunststofffolie verwendet werden.

Zur Haftung der Schutzfolie auf der Plattenoberfläche kann ein Acrylatkleber, ein Kautschukkleber oder irgendein anderer Kleber vorgesehen sein. Bevorzugt ist die Schutzfolie als Adhäsionsfolie ausgeführt, welche mit der klebenden Seite nach innen zu einer Folienrolle aufgerollt ist. Die Foliendicke kann von wenigen µ bis über 200 µ betragen. Die Schutzwirkung wird massgebend durch die Foliendicke bestimmt.

Aus dem konstruktiv bedingten maxmalen Folienrollendurchmesser und der gewählten Foliendicke ergibt sich die maximale Folienlänge pro Rolle. Die unterschiedlichen Plattenhöhen werden von einer oder mehreren Folienbahnen übereinander abgedeckt, wobei die jeweils obenliegende Folienbahn die untere um ein variables Mass überdeckt, d. h. überlappend angeordnet ist. Die Folienbahnen können unterschiedliche Breiten aufweisen. Die Breite einer "schmalsten" Folienbahn beträgt: Kleinste vorgesehene Plattenhöhe minus 2 x den Einstand (Abstand Plattenkante - Folie). Die Breite einer "nächst breiteren" Folienbahn beträgt: 2 x "schmalste" Folienbahn minus Folienüberdeckung. Die Breite einer weiteren Folienbahn würde analog berechnet.

Die in Bahnen unterteilten Folien lassen sich bei Bedarf leichter abziehen als eine vollflächige Folie wie sie aus dem Stand der Technik bekannt ist.

Durch das Applizieren von mehreren Schutzfolien, d. h. von mindestens 2 Schutzfolien, in Folienbahnen unterschiedlicher Breite auf der Oberfläche der Platte, insbesondere der Isolierglasplatte, können dasselbe Verfahren und dieselbe Anordnung für unterschiedliche Plattenabmessungen angewendet werden. Aus der Plattenhöhe und der gewählten Folienbreitenkombination unter Berücksichtigung der beiden Einstände ergibt sich die variable Folienüberdeckung.

In bevorzugter Weise wird durch die Positionierung der Schutzfolien in Querrichtung der Folienbahnen sowie durch geeignetes Ansetzen, Applizieren und Abschneiden der Schutzfolien in Längsrichtung der Folienbahnen ein Randbereich (Einstand) der Platte freigelassen. Dieser Randbereich wird auch als Einstand oder Folieneinstand bezeichnet. Die Positionierung erfolgt bevorzugt mit einer nachfolgend dargestellten Anordnung zum Applizieren von Schutzfolien auf einer Platte, insbesondere auf einem Isolierglaselement. Nach dem Applizieren der Schutzfolie ist somit kein Entfernen von Schutzfolie in einem Randbereich der Platte, insbesondere eines Isolierglaselements, welches in einen Fensterrahmen eingebaut wird, erforderlich. Die Effizienz bei der Abdeckung von Platten mit Schutzfolie kann so gesteigert werden.

Bevorzugt wird ein Überlappungsbereich der Folienbahnen entsprechend den Abmessungen der Platte gewählt. Der Überlappungsbereich wird klein gewählt, um mit Folienbahnen unterschiedlicher Breite eine möglichst grosse Gesamtbreite zur erhalten. Um die Gesamtbreite zu reduzieren, wird der Überlappungsbereich der Folienbahnen vergrössert. Damit kann die Anzahl von Folienbahnen unterschiedlicher Breite reduziert werden, da das Verfahren auch für Plattenmasse verwendet werden kann, deren Breite nicht der Summe der Breiten der Folienbahnen entspricht.

Bevorzugt umfasst das Applizieren der Schutzfolie auf der Platte eine auf einen festen Punkt bezogene Relativbewegung der Platte in Folienbahnrichtung. Dies ermöglicht insbesondere die Applikation einer Schutzfolie auf Platten, insbesondere Isolierglaselementen, welche in einem Produktionsprozess auf einem Fliessband durch die Produktionsanlage geführt werden. Diese Relativbewegung kann entgegen der Richtung erfolgen, in welcher die Schutzfolie in einer Folienbahn auf die Platte, insbesondere das Isolierglaselement, appliziert wird. In diesem Fall kann die Zeit minimiert respektiv die Geschwindigkeit maximiert werden, um die Schutzfolie auf der Platte zu applizieren.

In einer erfindungsgemässen Anordnung sind beidseitig je zwei Folienapplikationsvorrichtungen gegenüber der Platte quer und längs verschiebbar gelagert, um mehrere Folienbahnen mit entfernbarer Schutzfolie unterschiedlicher Breite auf der Platte zu applizieren. Entsprechend der Platten breite und den Breiten der beiden Folienbahnen werden die Anzahl der zu applizierenden Folienbahnen und die Überlappungen berechnet. Danach wird die Platte automatisch beschichtet.

Bevorzugt weist eine Folienapplikationsvorrichtung eine Folienrolle und eine Saug-Presswalze auf, wobei eine Schutzfolie von der Folienrolle zur Saug-Presswalze geführt ist und von dieser gehalten ist für das Applizieren der Schutzfolie auf der Platte. Die Folienrolle ist ein Speicher mit Schutzfolie. Die Folienrolle ist leicht zugänglich angeordnet, da diese ersetzt werden muss sobald die Folie aufgebraucht ist. Die Saug-Presswalze ist eingerichtet um die Schutzfolie mit einer Saugeinrichtung zu halten und auf die Platte, insbesondere das Isolierglaselement, aufzuwalzen.

Die Schutzfolie ist auf der Folienrolle wie oben beschrieben aufgewickelt.

Ein Kunststoffbelag bildet den Aussendurchmesser der Saug-Presswalze und kann eine geschliffene Oberfläche aufweisen. Saugbohrungen sind in einem regelmässigen Raster auf der gesamten Zylinderoberfläche angeordnet. Die Elastizität der Zylinderoberfläche gleicht die Unebenheiten der Plattenoberfläche aus. Die Folienapplikation erfolgt mit gleichmässigem Anpressdruck über die Fläche.

Vorzugsweise weist eine Folienapplikationsvorrichtung eine Schneidvorrichtung auf, um die Schutzfolie zwischen der Folienrolle und der Saug-Presswalze zu durchtrennen. Das Durchtrennen der Schutzfolie erfolgt bevorzugt im Stillstand, nachdem die Folienapplikationsvorrichtung angehalten ist. Da sich nach dem Durchtrennen der Schutzfolie noch ein Ende der Schutzfolie auf der Saug-Presswalze befindet, wird die Folienapplikationsvorrichtung danach erneut verfahren, um dieses Ende fertig zu applizieren.

Alternativ wird die Folie auf der Saug-Presswalze durchtrennt. Allerdings kann ein Durchtrennen an dieser Stelle zu Beschädigungen der Oberfläche der Saug-Presswalze führen. Zudem sind diese Stellen schwer zugänglich. So kann die Schutzfolie auf der Platte nicht am Scheitelpunkt der Saug-Presswalze durchtrennt werden, sondern die Schutzfolie muss an einer Stelle durchtrennt werden, welche von der Saug-Presswalze nach dem Applizieren der Schutzfolie wieder zugänglich gelassen ist. Dies führt dazu, dass die Schutzfolie welche sich zwischen dieser Trennstelle und dem Scheitelpunkt der Saug-Presswalze befindet wieder von der Platte entfernt werden muss. Um diesen wieder von der Platte entfernte Anfang der Schutzfolie erneut applizieren zu können, muss die Schutzfolie zurückgezogen werden, so dass der Anfang der Schutzfolie auf dem Scheitelpunkt der Saug-Presswalze oder auf der Saug-Presswalze entlang der Schutzfolienbahn noch näher an die Folienrolle zu liegen kommt.

Bevorzugt weist eine Folienapplikationsvorrichtung eine Folienführung auf, um die Schutzfolie für das Durchtrennen festzuhalten und/oder um die Schutzfolie von der Folienrolle der Saug-Presswalze über ein stabilisierendes Luftkissen zuzuführen. Die Folienführung ist beispielsweise unmittelbar bei der Saug-Presswalze zwischen der Folienrolle und der Saug-Presswalze angeordnet. Die Folienführung kann zum Festhalten der Schutzfolie eine Saugvorrichtung aufweisen, welche vor dem Durchtrennen eingeschaltet wird und die Schutzfolie für das Durchtrennen festhält. Statt einer Saugvorrichtung kann die Folienführung eine Klemmvorrichtung zum Festklemmen der Schutzfolie aufweisen. Um nach dem Durchtrennen der Schutzfolie diese der Saug-Presswalze zuzuführen, kann die Folienführung eine Blasvorrichtung aufweisen, welche die Schutzfolie in Richtung der Saug-Presswalze bläst und von dieser bei einem entsprechenden Vorschieben der Schutzfolie in Richtung der Saug-Presswalze von dieser angesaugt und festgehalten werden kann.

In einer alternativen bevorzugten Ausführung weist eine Folienapplikationsvorrichtung eine Folienrolle, eine Umlenkrolle und eine gegenüber der Oberfläche der Platte bewegliche Rakel auf, wobei eine Schutzfolie von der Folienrolle über die Umlenkrolle zur Rakel geführt ist für das Applizieren der Schutzfolie auf der Platte. Die Rakel weist eine Applikationskante auf, mit welcher die Schutzfolie beim Applizieren auf der Platte aufgebracht wird. An die Applikationskante der Rakel schliessen zwei ebene Flächen, wobei die eine Fläche als Rakelgleitfläche dient, an welcher die Folie geführt wird. Die andere der beiden Flächen wird nachfolgend als Leerfläche bezeichnet, da an dieser keine Folie geführt ist. Auf der gegenüberliegenden Seite der Applikationskante weist die Rakel eine Abschlussfläche auf, womit die Rakel einen geschlossenen Körper bildet. Die Rakelgleitfläche, Leerfläche und Abschlussfläche sind beispielsweise in einem gleichseitigen Dreieck angeordnet. Sie können auch in einem gleichschenkligen Dreieck oder in irgendeiner anderen Weise angeordnet sein. Die Folie wird von der Folienrolle abgerollt und mit der nicht-klebenden Seite über die Umlenkrolle sowie an der Führungsfläche der Rakel geführt.

Bevorzugt weist die Rakel eine auswechselbare Unterlage auf, mit einer darauf aufgesetzten elastischen Unterlage mit einem reibungsarmen, verschleissfesten Kantenschutz. Die elastische Unterlage ermöglicht eine Angleichung an Unebenheiten, wobei durch den reibungsarmen, verschleissfesten Kantenschutz eine hohe Lebensdauer gewährleistet ist.

Alternativ ist eine feste Unterlage vorgesehen, welche zwar keine Anpassung an Unebenheiten, dafür aber einen höheren Anpressdruck der Folie ermöglicht.

Vorzugsweise ist die Rakelgleitfläche mit Bohrungen versehen, durch die ein Luftstrom wahlweise als eine Saug- oder als eine Blasströmung leitbar ist, wobei bei einer Saugströmung die Schutzfolie zum Schneiden auf der elastischen Unterlage gehalten ist und anhaftet, und wobei bei einer Blasströmung die Schutzfolie während dem Applizieren reibungslos gleitet. Die Saug- oder Blasströmung kann im Rakel erzeugt werden oder von einer ausserhalb der Rakel angeordneten Saug- oder Blasvorrichtung, welche über eine Leitung mit der Rakel verbunden ist. Die Rakel bildet einen geschlossenen Körper und die Saug- oder Blasströmung bewirkt einen Unter- oder Überdruck in der Rakel.

Alternativ ist die Rakelgleitfläche mit Luftschlitzen versehen, um mit einer Saug- oder Blasströmung die Folie anzuhaften oder reibungslos gleiten zu lassen.

Bevorzugt ist ein Folienmesser vorgesehen, welches entlang der Rakel verfahrbar ist, um die Schutzfolie entlang der Rakelspitze durchzuschneiden. Das Folienmesser kann beispielsweise auf der Seite der Leerfläche der Rakel angeordnet sein. Beim Schneiden mit dem Folienmesser kann die Platte, auf welcher die Schutzfolie aufgebracht ist, als Widerlager dienen. Das Folienmesser kann eine oder mehrere feste Klingen aufweisen oder als Rollmesser ausgeführt sein.

Bevorzugt ist die Umlenkrolle eine Breitstreckwalze. Dadurch ergibt sich ein Breitstrecken der Schutzfolie quer zur Laufrichtung, was insbesondere ein falten- und schwielenfreies Applizieren der Schutzfolie bewirkt.

Alternativ ist die Umlenkrolle eine konventionelle Walze. Dadurch kann die Vorrichtung kostengünstiger ausgeführt werden. Allerdings besteht das Risiko der Bildung von Falten oder Schwielen.

Vorzugsweise ist eine Bremsvorrichtung vorgesehen, um die Folienrolle mit einem einstellbaren Drehmoment abzubremsen. Die Betätigung der Bremsvorrichtung kann beispielsweise pneumatisch, hydraulisch, mechanisch, elektrisch oder in irgendeiner anderen Weise erfolgen. Die Bremsvorrichtung kann beispielsweise als Nabenbremse, als Scheibenbremse oder als irgendeine andere Bremse ausgeführt sein.

Vorzugsweise sind die Saug-Presswalze respektive die Rakel einer Folienapplikationsvorrichtung relativ zur Platte in einer senkrechten Richtung verschiebbar, so dass die Saug-Presswalze respektive die Rakel auf der Platte aufgesetzt und davon abgesetzt werden können. Vor dem Aufsetzen der Saug-Presswalze kann durch diese der Anfang der Schutzfolie entlang einem Segment des Umfangs der Saug-Presswalze gehalten werden, wobei der Anfang der Schutzfolie durch eine Drehung der Saug-Presswalze beispielsweise derart positioniert wird, dass beim Ansetzen des Scheitpunkts der Saug-Presswalze auf die Kante der Platte und dem anschliessenden Verfahren der Saug-Presswalze entlang der Platte gerade ein Randbereich der Platte von der Schutzfolie freigelassen ist. Bei der Rakel wird die Schutzfolie in entsprechender Weise vor dem Aufsetzen positioniert.

Alternativ erfolgt das Aufsetzen und Absetzen der Saug-Presswalze respektive der Rakel durch eine entsprechende Verschiebung der Platte. Je nach Plattenabmessungen erfordert dies jedoch eine entsprechend leistungsfähige Verschiebevorrichtung, was zu erhöhten Kosten führen kann.

Bevorzugt sind Folienapplikationsvorrichtungen auf gegenüberliegenden Seiten der Platte angeordnet, so dass die Platte beidseitig mit Schutzfolie abgedeckt werden kann. Die Folienapplikationsvorrichtungen können auf den gegenüberliegenden Seiten der Platte synchron bewegt werden, so dass der Anpressdruck der Folienapplikationsvorrichtungen ausgeglichen wird und somit eine Durchbiegung der Platte vollständig verhindert wird.

Vorzugsweise ist eine Saug-Presswalze mit ihrer gesamten Folienapplikationsvorrichtung gegenüber der Plattenoberfläche pendelnd angeordnet. Die Pendelbewegung muss um die Mitte der Breite der Saug-Presswalze erfolgen. Die Pendelbewegung kann gegenüber der Normallage der Saug-Presswalze beispielsweise ± 2° betragen. Damit lässt sich die Saug-Presswalze entlang deren Breite exakt parallel zur Oberfläche der Platte ausrichten. Dies ist insbesondere bei Platten von Vorteil, welche sich durch den Anpressdruck der Saug-Presswalze verbiegen. Die identische Pendelbewegung der zugehörigen Folienapplikationsvorrichtung bewirkt eine verzugsfreie Zuführung der Folienbahn.

Vorzugsweise ist der Anpressdruck der Saug-Presswalze beim Applizieren der Schutzfolie auf einen vorgegebenen Wert einstellbar und/oder regelbar. Durch das Einstellen oder Regeln des Anpressdrucks kann eine hohe Qualität gewährleistet werden, so dass die Schutzfolie auch längere Zeit sicher auf der Plattenoberfläche haftet. Infolge der Neigung der Platte und somit auch der Folienapplikationsvorrichtungen wirkt das Konstruktionsgewicht der Vorrichtung plus das variable Gewicht der vollen bzw. leeren Folienrolle zusätzlich zur Anpresskraft je nach Lage der Folienapplikationsvorrichtung positiv bzw. negativ. Der Folienrollendurchmesser und damit das Gewicht wird laufend ermittelt und entsprechend der eingestellte Anpressdruck korrigiert.

Es kann eine Ladestation und/oder eine Entladestation vorgesehen sein, um die Platten für das Applizieren der Schutzfolie auf ein Förderband zu beladen und/oder um die mit Schutzfolie versehene Platte vom Förderband zu entladen.

Die Platte wird auf Transportrollen oder -riemen in die Folieranlage eingefahren und positioniert. Die Plattenabmessungen Dicke, Höhe und Länge werden gleichzeitig vermessen. Die entsprechend der Plattenhöhe von der Steuerung gewählte Foliereinheiten (vorne und hinten) fahren in Ausgangslage, senken auf die Plattenoberflächen ab und belegen die Platte längs mit den entsprechenden Folienbändern.

Entspricht die verbleibende noch unbeschichtete Plattenhöhe weniger als die aktive Rollenbreite, so laufen die beiden Foliereinheiten in die Ausgangslage zurück und stellen gleichzeitig die neue Arbeitshöhe ein. Das Folieren der zweiten Bahn erfolgt.

Entspricht die verbleibende noch unbeschichtete Plattenhöhe mehr als die aktive Rollenbreite, so laufen die beiden Foliereinheiten in die Freistellung weiter und geben den Weg frei für die nachlaufenden Foliereinheiten mit den breiteren Folienbändern.

Die Folierung mit den breiteren Folienbändern kann sich so oft wiederholen bis die gesamte Plattenfläche belegt ist.

Danach fahren die Foliereinheiten in ihre Ausgangslagen zurück und die Platte fährt aus der Folieranlage aus.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1a, 1 b: ein Fenster mit einer Glasplatte bzw. einem lsolierglaselement, welche von einer Schutzfolie abgedeckt ist in Aufsicht und in einem Querschnitt;
- Fig. 2: eine Fensterglasplatte oder ein Isolierglaselement mit Schutzfolien mit Folienbahnen unterschiedlicher Breite;
- Fig. 3: eine Folienapplikationsvorrichtung;
- Fig. 4: eine Anordnung zum erfindungsgemässen Applizieren von Schutzfolien;
- Fig. 5: das Abschnelden der Schutzfolle;
- Fig. 6: das Erfassen der Schutzfolie durch eine Saug-Presswalze;
- Fig. 7: den Ablauf des Applizierens einer Schutzfolie; und
- Fig. 8: die Unterteilungen der Saug-Presswalze in unterschiedliche Segmente;

Grundsätzlich sind in den Figuren gleiche Teile mit gleichen Bezugszeichen versehen.

### Wege zur Ausführung der Erfindung

Nachfolgend wird ein Ausführungsbeispiel anhand eines Isolierglaselements dargestellt. Mit dem erfindungsgemässen Verfahren und der erfindungsgemässen Anordnung kann jedoch irgendeine Platte, also z. B. eine Glasplatte, eine Holzplatte, ein Fensterglas, eine Metallplatte, eine Kunststoffplatte oder irgendeine andere Platte, mit Schutzfolie überzogen werden. Das nachfolgende Ausführungsbeispiel zeigt das Abdecken einer Platte mit mehreren Schutzfolien anhand von 2 Schutzfolienbreiten. Selbstverständlich kann das Abdecken einer Platte mit mehr als 2 Schutzfotienbreiten erfolgen.

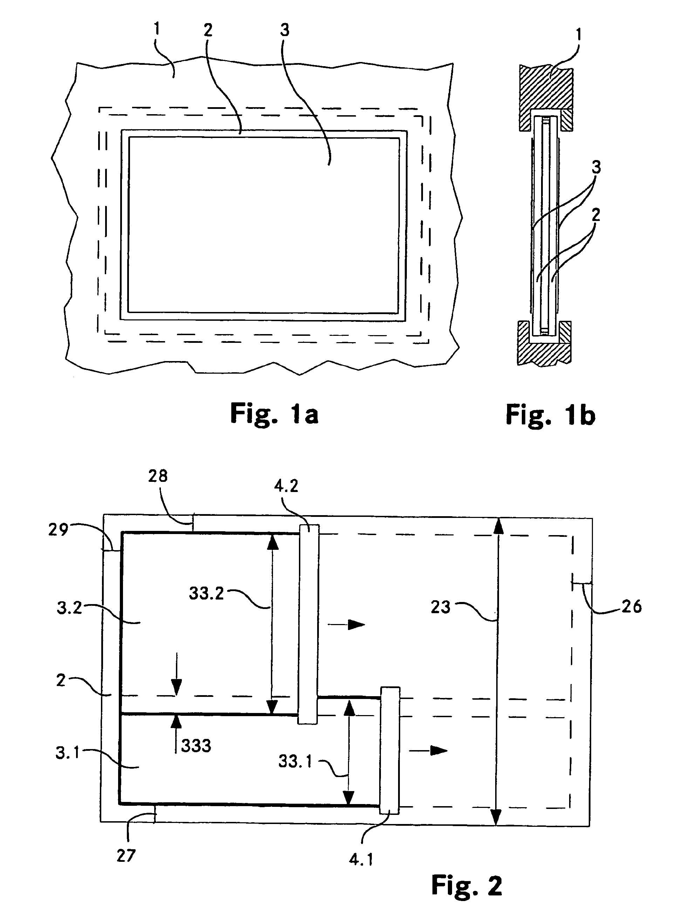

Fig. 1a zeigt schematisch die Aufsicht auf ein Fenster mit einem Fensterrahmen 1 und einem Isolierglaselement 2, welches von einer Schutzfolie 3 abgedeckt ist. Da ein Randbereich des Isolierglaselements 2 von der Schutzfolie freigelassen ist, kann die Schutzfolie bei eingebautem und versiegeltem Element problemlos entfernt werden. Fig. 1b zeigt einen Querschnitt durch das Fenster mit dem Fensterrahmen 1, dem Isolierglaselement 2 und der Schutzfolie 3. Wie aus Fig. 1b ersichtlich, ist die Schutzfolie 3 auf beiden Seiten des Isolierglaselements 2 angebracht. Selbstverständlich kann die Schutzfolie 3 bei Bedarf auch nur auf einer Seite des Isolierglaselements 2 angebracht sein.

Fig. 2 zeigt schematisch die Aufsicht auf ein Isolierglaselement 2 und die Anwendung des Verfahrens zur Abdeckung dieses Isolierglaselements 2 mit Schutzfolie. Das Isoliergtaselement 2 hat eine Elementhöhe 23. Mit einer ersten Folienapplikationsvorrichtung 4.1 wird von einer ersten Folienrolle eine erste Schutzfolie 3.1 in einer Folienbahn auf das Isolierglaselement 2 appliziert. Beispielsweise versetzt oder zu einem spätern Zeitpunkt wird mit einer zweiten Folienapplikationsvorrichtung 4.2 von einer zweiten Folienrolle eine zweite Schutzfolie 3.2 in einer Folienbahn auf das Isolierglaselement 2 appliziert. Die erste Breite 33.1 der Folienbahn der ersten Schutzfolie 3.1 unterscheidet sich wie in Fig. 2 skizziert von der zweiten Breite 33.2 der Folienbahn der zweiten Schutzfolie 3.2. Die zweite Schutzfolie 3.2 überlappt die erste Schutzfolie 3.1 in einer Überlappung 333. Die erste und die zweite Schutzfolie 3.1, 3.2 werden derart angebracht, dass ein Folieneinstand 29, 28, 27, 26 auf der Oberfläche des Isolierglaselements 2 freigelassen ist und somit das Isolierglaselement 2 in einen Fensterrahmen eingebaut werden kann, ohne Schutzfolien einzuklemmen. Falls die Elementhöhe des Isolierglaselements kleiner als die doppelte Folienbreite 3.1 ist, dann wird die Schutzfolie 3.1 zwei Mal appliziert, unter Beachtung des Folieneinstands 27, 28 und der Überlappung 333 der Folien.

Für eine oder mehrere Folienrollen der Breiten 300mm und 580mm können bei einem Folieneinstand von 20mm oder 30mm lsolierglaselemente der folgenden Elementhöhen mit Schutzfolie überzogen werden:

| **Elementhöhen** | | **Folienrollenbreite** | |
|---|---|---|---|
| **Folieneinstand 20 mm** | **Folieneinstand 30 mm** | **300 mm** | **580 mm** |
| 340 mm ... 620 mm | 360 mm ... 640 mm | 2*300 + 0*580 | |
| 620 mm ... 900 mm | 640 mm ... 920 mm | 1*300 + 1*580 | |
| 900 mm ... 1180 mm | 920 mm ... 1200 mm | 1*300 + 2*580 | |
| 1 180 mm ... 1460 mm | 1200 mm ... 1480 mm | 1*300 + 2*580 | |
| 1460 mm ... 1740 mm | 1480 mm ... 1760 mm | 1*300 + 3*580 | |
| 1740 mm ... 2020 mm | 1760 mm ... 2040 mm | 1*300 + 3*580 | |
| 2020 mm ... 2300 mm | 2040 mm ... 2320 mm | 1*300 + 4*580 | |
| 2300 mm ... 2580 mm | 2320 mm ... 2600 mm | 1*300 + 4*580 | |

Somit können mit derselben Anordnung, welche beispielsweise eine erste Folienapplikationsvorrichtung 4.1 für eine Folienrolle mit einer Folienrollenbreite 300 mm und eine zweite Folienapplikationsvorrichtung 4.2 für eine Follenrolle mit einer Folienrollenbreite 580 mm aufweist, bei einem Folieneinstand von 20 mm respektive 30 mm Isolierglaselemente der Elementhöhen ab 340 mm respektive 360 mm bis 2580 mm respektive 2600mm mit Schutzfolie überzogen werden. Damit lassen sich mit derselben Anordnung Isolierglaselemente ganz unterschiedlicher Grössen mit Schutzfolie überziehen.

Selbstverständlich können beliebige andere Folienrollenbreiten und/oder eine beliebige andere Anzahl Folienrollen verwendet werden, um Isollerglaselemente beliebiger Grössen mit Schutzfolie zu überziehen.

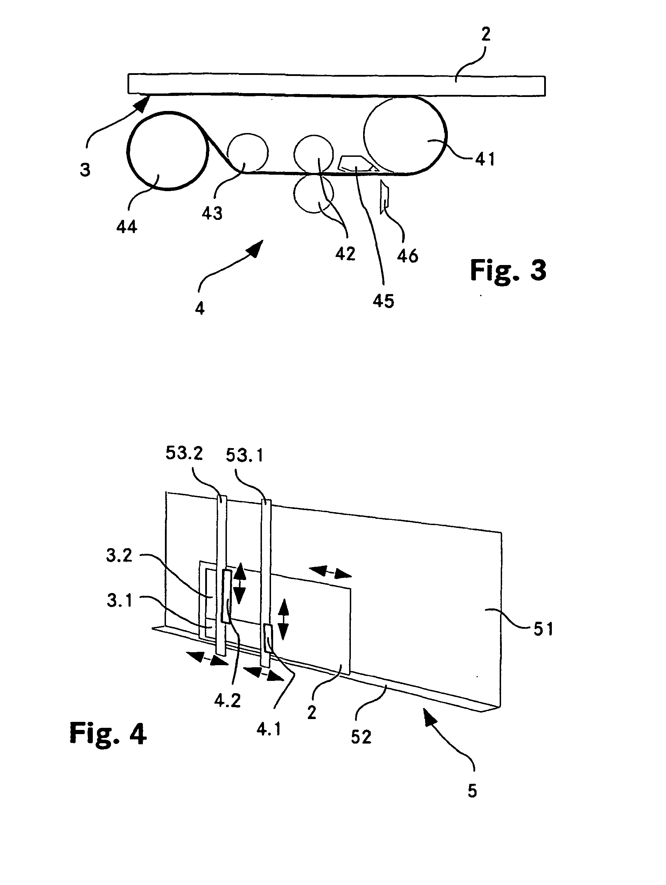

Fig. 3 zeigt schematisch den Querschnitt einer Folienapplikationsvorrichtung 4. Von einer Folienrolle 44 wird eine Schutzfolie 3 abgerollt, um diese über eine Umlenkrolle 43, angetriebenen Führungsrollen 42 und eine Saug-Presswalze 41 auf dem Isolierglaselement 2 zu applizieren. Die Folienapplikationsvorrichtung 4 umfasst nicht gezeigte Halterungen für die erwähnten Bestandteile. Die Schulzfolle 3 weist eine Kleberschicht auf, um eine Haftung der Schutzfolie 3 auf dem Isolierglaselement 2 zu gewährleisten. Die Kleberschicht befindet sich dementsprechend auf der Seite der Schutzfolie 3, welche dem Isolierglaselement 2 zugewandt ist. Somit wird die Schutzfolie 3 von der Saug-Presswalze 41 und der Umlenkrolle 43 auf der Seite ohne Kleberschicht geführt. Von den Führungsrollen 42 wird die Schutzfolie 3 sowohl auf der klebenden Seite als auch auf der nichtklebenden Seite geführt. Damit die Schutzfolie 3 mit der klebenden Seite nicht auf der entsprechenden Führungsrolle 42 haftet, weist diese Führungsrolle eine spezielle Beschichtung auf, beispielsweise Teflon. Auf der Folienrolle 44 ist die Schutzfolle 3 mit der klebenden Seite nach innen aufgerollt.

Die Saug-Presswalze 41 weist am Walzenumfang Öffnungen auf, um die Schutzfolie 3 anzusaugen und festzuhalten. Die Saugkraft wird beispielsweise durch eine Luftpumpe erzeugt, welche auf der Walzeninnenseite zu einem Unterdruck führt und somit die Schutzfolie 3 durch den durch die Öffnungen fliessenden Luftstrom an die Walze gesaugt und festgehalten wird. Durch eine entsprechende Verstellung oder Einstellung der Luftpumpe, kann die Saugkraft ein- und ausgeschaltet oder auf einen gewünschten Wert eingestellt werden. Die Schutzfolie 3 wird somit von der Saug-Presswalze 41 in definierter Weise festgehalten. Zum Schneiden der Folie kann irgend eine Trennvorrichtung vorgesehen sein (z.B. Laser, etc.).

Durch eine Relativbewegung der Saug-Presswalze 41 in senkrechter Richtung gegenüber dem Isolierglaselement 2, kann die von der Saug-Presswalze 41 gehaltene Schutzfolie 3 auf dem Isolierglaselement 2 aufgesetzt werden. Durch eine Drehbewegung der Saug-Presswalze 41 und eine Relativbewegung der Saug-Presswalze 41 in paralleler Richtung gegenüber dem Isolierglaselement 2, kann die Schutzfolie auf dem Isolierglaselement 2 appliziert werden. Bei stillstehender Saug-Presswalze 41 kann die Schutzfolie von einer Folienführung 45 gehalten werden und die Schutzfolie 3 kann mit einem Messer 46 durchtrennt werden. Anschliessend kann die Drehung und Relativbewegung der Saug-Presswalze 41 in paralleler Richtung gegenüber dem Isolierglaselement 2 fortgesetzt werden, um das sich nach dem Abschneiden der Schutzfolie 3 auf der Saug-Presswalze 41 befindliche Ende der Schutzfolie 3 auf dem Isolierglaselement 2 fertig zu applizieren.

Fig. 4 zeigt schematisch eine perspektivische Darstellung einer erfindungsgemässen Anordnung zum Applizieren von Schutzfolie auf einem Isolierglaselement 2. Eine Halterung 5 umfasst eine Transporteinrichtung 52 und eine Abstützung 51. In Fig. 4 ist nicht dargestellt, dass die Abstützung 51 gegenüber der Vertikalen leicht nach hinten geneigt ist und insbesondere Führungsrollen oder ähnliche Abstützungsmittel umfasst. Die Transporteinrichtung 52 ist eingerichtet, um das Isolierglaselement 2 entlang der Abstützung 51 zu verschieben.

Wie in Fig. 4 gezeigt, umfasst die erfindungsgemässe Anordnung eine erste und eine zweite Applikationsvorrichtung 4.1, 4.2. Diese sind je an einem ersten und zweiten Träger 53.1, 53.2 verschiebbar gehalten, wobei die Applikationsvorrichtungen 4.1, 4.2 quer und längs zum lsolierglaselement 2 beliebig verschoben werden können.

Mit einer Anordnung gemäss Fig. 4 können auf dem Isolierglaselement 2 mehrere Folienbahnen mit Schutzfolien 3.1, 3.2 appliziert werden. Durch die Querverschiebung der Applikationsvorrichtungen 4.1, 4.2 wird in Folienrichtung ein Randbereich freigelassen. Indem die Applikationsvorrichtungen 4.1, 4.2 an der entsprechenden Stelle auf dem Isolierglaselement 2 aufgesetzt werden und wiederum an der entsprechenden Stelle abgeschnitten werden, wird in Folienrichtung am Anfang und Ende der Schutzfolien 3.1, 3.2 ebenfalls ein Randbereich freigelassen. Somit ist nach der Applikation der Schutzfolien 3.1, 3.2 kein Bearbeitungsschritt notwendig, um in einem Randbereich die Schutzfolien 3.1, 3.2 von der Oberfläche des Isolierglaselements 2 zu entfernen.

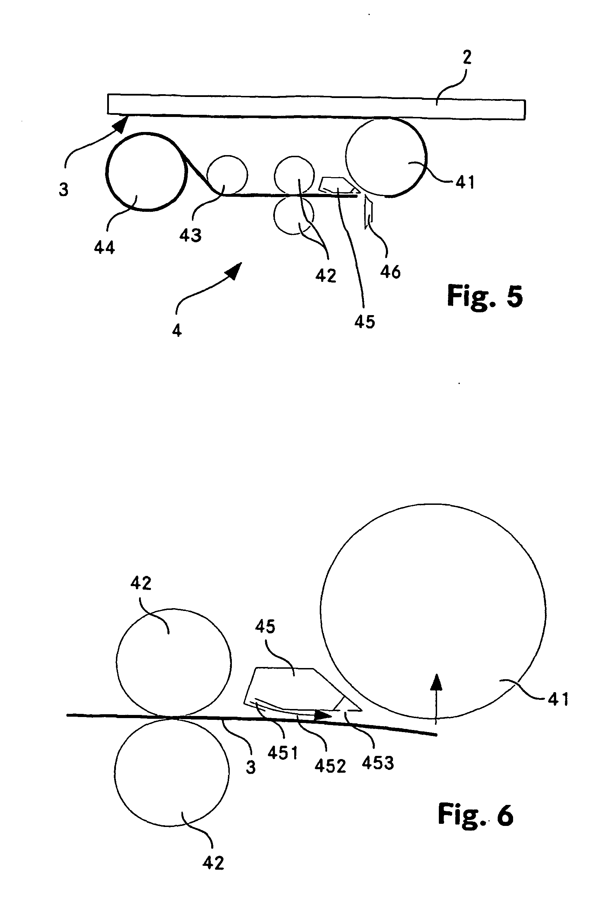

Fig. 5 zeigt in einem Querschnitt schematisch das Abschneiden der Schutzfolie durch die Folienapplikationsvorrichtung 4. Die Folienführung 45 weist Saugbohrungen 453 (in Fig. 6 eingezeichnet) auf. An einer gewünschten Stelle wird die Applikationsvorrichtung 4 angehalten und indem mit einer Luftpumpe ein nach innen gerichteter Luftstrom durch die Saugbohrungen erzeugt wird, wird die Schutzfolie 3 von der Folienführung 45 festgehalten. Anschliessend wird die Schutzfolie 3 mit dem Messer 46 abgeschnitten und das Ende der Schutzfolie 3, welches sich auf der Saug-Presswalze 41 befindet, wird durch ein Weiterverfahren der Applikationsvorrichtung 4 auf dem lsolierglaselement 2 appliziert.

In Fig. 6 sind mit dem Bezugszeichen 453 zudem die gemäss Fig. 5 erwähnten Saugbohrungen erwähnt, um die Schutzfolie festzuhalten für das Abschneiden mit dem Messer 46.

Fig. 6 zeigt in einem Querschnitt schematisch das Erfassen der Schutzfolie durch die Saug-Presswalze. Die Folienführung 45 weist einen Luftaustrittsschlitz 451 auf, um einen Luftstrom 452 zu erzeugen, welcher in Richtung der Saug-Presswalze weist. Nachdem die Schutzfolie 3 abgeschnitten und das Ende auf dem Isolierglaselement 2 fertig appliziert ist, wird der Luftstrom 452 eingeschaltet. Dies erfasst die Schutzfolie 3, welche durch die Führungsrollen 42 in Richtung der Saug-Presswalze geschoben wird. Der Luftstrom 452 stabilisiert dabei die Schutzfolie 3 und das Luftkissen zwischen Folienführung 45 und Schutzfolie 3 hält die Schutzfolie in einem geringen Abstand reibungsarm fest, so dass diese in einem genügend kleinen Abstand an die Saug-Presswalze 41 geschoben wird, wo sie durch einen beschriebenen Luftstrom der Saug-Presswalze 41 erfasst und gehalten wird.

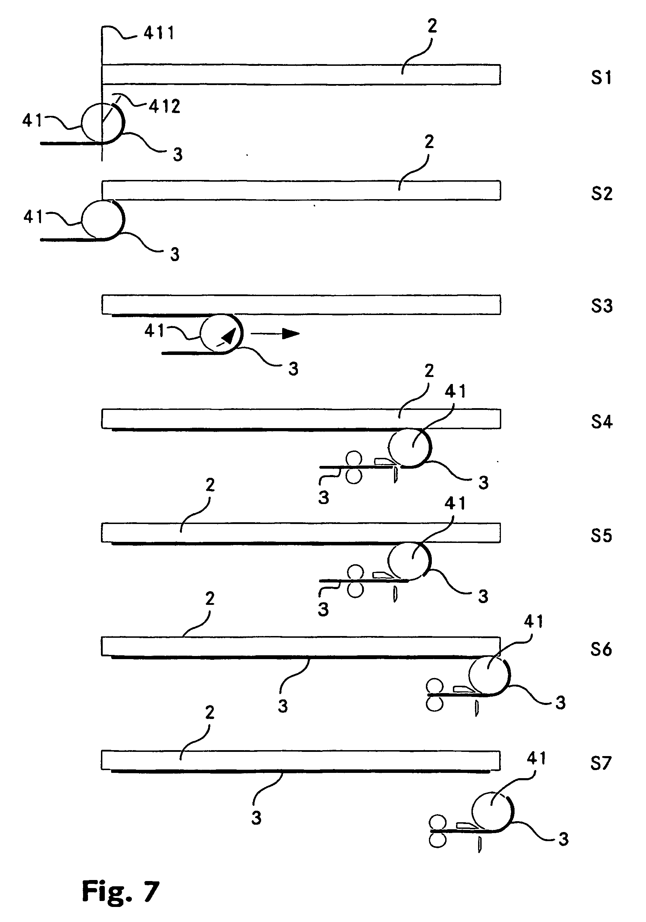

Fig. 7 zeigt in einem Querschnitt den Ablauf des Applizierens einer Schutzfolie 3 in einer Folienbahn.

Die Folienapplikationsvorrichtung 4 wird von der Saug-Presswalze 41 angetrieben, die auf dem Isolierglaselement aufliegend motorisch in Folierrichtung gezogen wird. Eine Führungsrolle 42 ist über eine Kupplung mit der Saug-Presswalze 41 verbunden.

In Schritt S 1 wird die Saug-Presswalze 41 quer und längs gegenüber dem Isolierglaselement 2 positioniert. In Fig. 7 ist nur die Längspositionierung ersichtlich. Wie in Fig. 7 dargestellt, kann die Mittelsenkrechte 411 der Saug-Presswalze 41 in Längsrichtung bündig zur Längsaussenkante des Isolierglaselements 2 ausgerichtet werden. Die Schutzfolie 3 wird von der Saug-Presswalze 41 gehalten, wobei zwischen dem Anfang der Schutzfolie 3 und der Mittelsenkrechten 411 ein Winkel 412 besteht. Der Winkel 412 ist so gewählt, dass im Schritt S2 beim Aufsetzen der Saug-Presswalze auf das Isolierglaselement 2 der Anfang der Schutzfolie 3 in Längsrichtung so zu liegen kommt, dass ein Randbereich des Isolierglaselements 2 freigelassen wird (Folieneinstand).

Durch ein Abwälzen der Saug-Presswalze 41 in Längsrichtung des Isolierglaselements 2 wird im Schritt S3 die Schutzfolie 3 auf das Isolierglaselement 2 appliziert. Das Verfahren der Saug-Presswalze 41 erfolgt durch eine Bewegung der Saug-Presswalze 41 parallel zur Oberfläche des Isolierglaselements 2 sowie durch eine Rotation der Saug-Presswalze 41. Beide Bewegungsrichtungen sind im Schritt S3 in Fig. 7 mit einem Pfeil hervorgehoben. Von einer in Fig. 7 nicht dargestellten Folienrolle wird dabei kontinuierlich Schutzfolie 3 abgewickelt und der Saug-Presswalze 41 zugeführt.

Im Schritt S4 wird das Abwälzen der Saug-Presswalze 41 angehalten und die Schutzfolie 3 wird in einem Bereich durchschnitten, welcher zwischen der erwähnten Folienrolle und der Saug-Presswalze 41 liegt. Das Abschneiden der Schutzfolie 3 erfolgt derart, dass der von der Saug-Presswalze 41 gehaltene Teil der Schutzfolie 3 gerade ausreicht, um im Schritt S6 das Abwälzen der Schutzfolie 3 so zu beenden, dass wie in Schritt S7 gezeigt nach dem Absetzen der Saug-Presswalze 41 ein Randbereich des Isolierglaselements 2 von der Schutzfolie 3 freigelassen ist (Folieneinstand).

Im Schritt S5 der Fig. 7 ist gezeigt, dass die Schutzfolie 3 nach dem Abschneiden vollständig an der Oberfläche der Saug-Presswalze 41 anliegt. Die Foliereinheit ist um den Winkel 412 bei ausgekuppelter Verbindung zwischen Saug-Presswalze und Führungsrolle 42 vorgefahren. Dadurch ergibt sich ein Abstand zwischen Folienende und Folienanfang der nächsten Folie, der dem Einstand 29 des nächsten Isolierglaselements 2 entspricht.

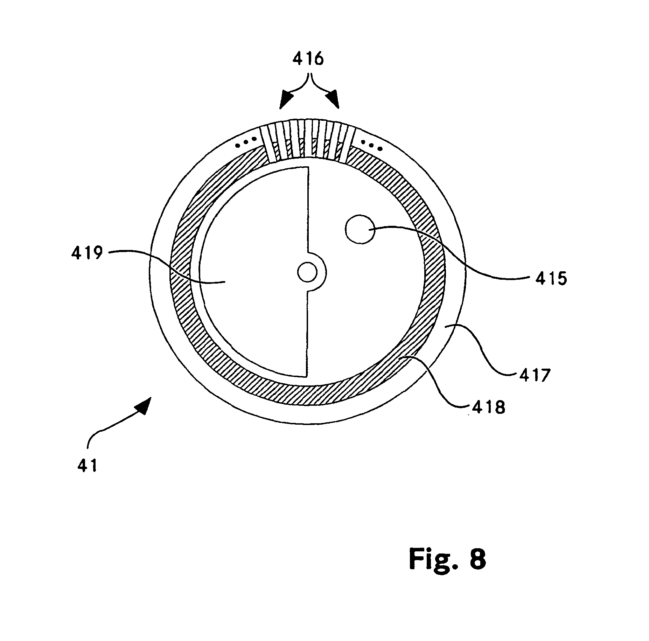

Fig. 8 zeigt den Querschnitt der Saug-Presswalze 41, welche einen Metallmantel 418 umfasst, der von einem elastischen Mantel 417 umgeben ist. Am Umfang des Metallmantels 418 und des elastischen Mantels 417 sind Saugbohrungen 416 vorgesehen. Zur besseren Übersichtlichkeit sind in Fig. 8 nur einige wenige der Saugbohrungen eingezeichnet und es ist mit Punkten angedeutet, dass diese Saugbohrungen sich entlang dem Umfang fortsetzen. Es ist eine Absaugöffnung 415 vorgesehen, um durch Absaugen von Luft den Innenraum des Metallmantels 418 zu evakuieren und eine Saugströmung durch die Saugbohrungen 416 zu erzeugen. Mit einem feststehenden Verdrängungskörper 419 wird sichergestellt, das nur die Saugbohrungen 416 auf der gegenüberliegenden Seite am drehenden Zylinder evakuiert werden. Die Folie wird an dieser Teilfläche angesogen, hingegen nicht auf der anderen Teilfläche, welche durch den Verdrängungskörper 419 abgedeckt ist. Sobald die Schutzfolie auf dem Isolierglas fertig aufgebracht ist, wird diese somit von der Saug-Presswalze nicht mehr länger gehalten. Um die Wirkung des Verdrängungskörpers zu verbessern, kann die Spaltbreite zwischen dem Verdrängungskörper 419 und dem Metallmantel 418 entsprechend dimensioniert werden und/oder es können Dichtungslippen zwischen dem Verdrängungskörper 419 und dem Metallmantel 418 vorgesehen sein.

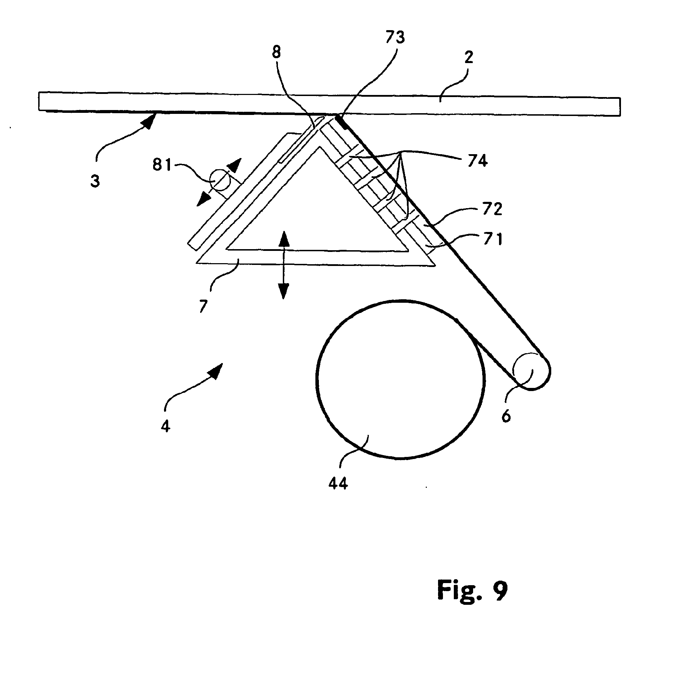

Fig. 9 zeigt eine alternative Folienapplikationsvorrichtung 4 mit einer Rakel 7 anstelle einer Saug-Presswalze. Von der Folienrolle 44 weg über eine Umlenkrolle 6, die auch eine Breitstreckwalze sein kann, wird die Schutzfolie 3 auf das zu beschichtende Substrat, also auf die Isolierglasplatte 2, aufgestrichen. Vertikal- und Horizontalbewegungen der pendelnd gelagerten Rakel-Foliereinheiten sind analog den Saug-Presswalzen-Foliereinheiten. Um das Mass des Folieneinstandes 29 nach der Substratvorderkante beginnt die Folienapplikation und endet um dasselbe Mass des Folieneinstandes 26 vor der Substrathinterkante. Während der Folienapplikation wird die Rakel 7 mit einem einstellbaren Druck gegen die Substratoberfläche gepresst. Über die Bohrungen 74 strömt Luft aus und bildet ein reibungsminderndes Luftkissen zwischen Folie und elastischer Unterlage 72, welche einen Kantenschutz 73 aufweist und auf einer entfernbaren Unterlage 71 aufliegt. Am Ende der Folienapplikation wird das Folienmesser 8 gegen die Folie, im Bereich des Aufsetzpunktes, gedrückt und über die Bohrungen 74 wird durch Evakuation die Folie auf der elastischen Unterlage 72 festgehalten. Eine Bewegung des Folienmessers 8 schneidet die Folie, insbesondere eine Vertikalbewegung durch Vertikalführung des Folienmessers 8 mit der Folienmesserantriebsvorrichtung 81. Anschliessend wird die Rakel mit der angesaugten Folie von der Substratoberfläche abgehoben.

Sowohl bei der Saug-Presswalzen-Foliereinheit wie auch bei der Rakel-Foliereinheit kann die Folienrolle (44) mit einem einstellbaren Drehmoment gebremst werden.

Zusammenfassend ist festzustellen, dass durch die Erfindung ein Verfahren und eine Anordnung zum Abdecken einer Platte, insbesondere eines Isolierglaselements, mit Schutzfolie geschaffen werden, welche Oberflächen mit weniger Verschnitt abdecken.

## Patentansprüche

1. Verfahren zum Abdecken einer Platte, insbesondere eines Isolierglaselements (2), mit Schutzfolie (3, 3.1, 3.2), **dadurch gekennzeichnet, dass** mehrere Schutzfolien (3, 3.1, 3.2) In Follenbahnen unterschiedlicher Breite auf der Platte mit mehreren gegenüber der Platte quer und längs verschiebbar gelagerten Folienapplikationsvorrichtungen (4, 4.1, 4.2) überlappend appliziert werden.

2. Verfahren nach Anspruch 1, **dadurch gekennzeichnet, dass** durch die Positionierung der Schutzfolien in Querrichtung der Folienbahnen sowie durch geeignetes Ansetzen, Applizieren und Abschneiden der Schutzfolien in Längsrichtung der Folienbahnen ein Randbereich der Platte freigelassen wird.

3. Verfahren nach einem der Ansprüche 1 oder 2, **dadurch gekennzeichnet, dass** ein Überlappungsbereich der Folienbahnen entsprechend der Abmessungen der Platte gewählt wird.

4. Verfahren nach einem der Ansprüche 1 bis 3, **dadurch gekennzeichnet, dass** das Applizieren der Schutzfolien auf der Platte eine auf einen festen Punkt bezogene Relativbewegung der Platte in Folienbahnrichtung umfasst.

5. Anordnung zum Abdecken einer Platte, insbesondere eines Isolierglaselements (2), mit Schutzfolie (3, 3.1, 3.2), **dadurch gekennzeichnet, dass** mehrere Folienapplikationsvorrichtungen (4, 4.1, 4.2) gegenüber der Platte quer und längs verschiebbar gelagert sind, um mehrere Folienbahnen mit entfernbarer Schutzfolie (3, 3.1, 3.2) unterschiedlicher Breite auf der Platte überlappend zu applizieren.

6. Anordnung nach Anspruch 5, **dadurch gekennzeichnet, dass** eine Folienapplikationsvorrichtung (4, 4.1, 4.2) eine Folienrolle (44) und eine Saug-Presswalze (41) aufweist, wobei eine Schutzfolie (3, 3.1, 3.2) von der Folienrolle zur Saug-Presswalze (41) geführt ist und von dieser gehalten ist für das Applizieren der Schutzfolie (3, 3.1, 3.2) auf der Platte.

7. Anordnung nach Anspruch 6, **dadurch gekennzeichnet, dass** eine Folienapplikationsvorrichtung (4, 4.1, 4.2) eine Schneidvorrichtung (46) aufweist, um die Schutzfolie (3, 3.1,3.2) zwischen der Folienrolle (44) und der Saug-Presswalze (41) zu durchtrennen.

8. Anordnung nach einem der Ansprüche 6 oder 7, **dadurch gekennzeichnet, dass** eine Folienapplikationsvorrichtung (4, 4.1, 4.2) eine Folienführung (45) aufweist, um die Schutzfolie (3,3.1,3.2) für das Durchtrennen festzuhalten und/oder um die Schutzfolie (3, 3.1, 3.2) von der Folienrolle (44) der Saug-Presswalze (41) über ein stabilisierendes Luftkissen zuzuführen.

9. Anordnung nach Anspruch 5, **dadurch gekennzeichnet, dass** eine Folienapplikationsvorrichtung (4, 4.1, 4.2) eine Folienrolle (44), eine Umlenkrolle (6) und eine gegenüber der Oberfläche der Platte bewegliche Rakel (7) aufweist, wobei eine Schutzfolie (3, 3.1, 3.2) von der Folienrolle über die Umlenkrolle (6) zur Rakel (7) geführt ist für das Applizieren der Schutzfolie (3,3.1,3.2) auf der Platte.

10. Anordnung nach Anspruch 9, **dadurch gekennzeichnet, dass** die Rakel (7) eine auswechselbare Unterlage (71) mit einer darauf aufgesetzten elastischen Unterlage (72) mit einem reibungsarmen, verschleissfesten Kantenschutz (73) aufweist.

11. Anordnung nach Anspruch 10, **dadurch gekennzeichnet, dass** die Rakelgleitfläche mit Bohrungen (74) versehen ist, durch die ein Luftstrom wahlweise als eine Saug- oder als eine Blasströmung leitbar ist, wobei bei einer Saugströmung die Schutzfolie (3, 3.1, 3.2) zum Schneiden auf der elastischen Unterlage (72) gehalten ist und anhaftet, und wobei bei einer Blasströmung die Schutzfolie (3, 3.1, 3.2) während dem Applizieren reibungslos gleitet.

12. Anordnung nach einem der Ansprüche 9 bis 11, **dadurch gekennzeichnet, dass** ein Folienmesser (8) vorgesehen ist, welches entlang der Rakel (7) verfahrbar ist, um die Schutzfolie (3, 3.1, 3.2) entlang der Rakelspitze durchzuschneiden.

13. Anordnung nach einem der Ansprüche 9 bis 12, **dadurch gekennzeichnet, dass** die Umlenkrolle (6) eine Breitstreckwalze ist.

14. Anordnung nach einem der Ansprüche 5 bis 13, **dadurch gekennzeichnet, dass** eine Bremsvorrichtung vorgesehen ist, um die Folienrolle (44) mit einem einstellbaren Drehmoment abzubremsen.

15. Anordnung nach einem der Ansprüche 5 bis 14, **dadurch gekennzeichnet, dass** die Saug-Presswalze (41) respektive die Rakel (7) einer Folienapplikationsvorrichtung (4, 4.1, 4.2) relativ zur Oberfläche der Platte in einer senkrechten Richtung verschiebbar sind, so dass die Saug-Presswalze (41) respektive die Rakel auf der Oberfläche der Platte aufgesetzt und davon abgesetzt werden können.

16. Anordnung nach einem der Ansprüche 5 bis 15, **dadurch gekennzeichnet, dass** Folienapplikationsvorrichtungen (4, 4.1, 4.2) auf gegenüberliegenden Seiten der Platte angeordnet sind, so dass die Platte beidseitig mit Schutzfolie (3, 3.1, 3.2) abgedeckt werden kann.

17. Anordnung nach einem der Ansprüche 5 bis 16, **dadurch gekennzeichnet, dass** die Saug-Presswalze (41) respektive die Rakel (7) mit ihrer gesamten Folienapplikationsvorrichtung (4, 4.1, 4.2) gegenüber der Plattenoberfläche pendelnd angeordnet ist.

18. Anordnung nach einem der Ansprüche 5 bis 17, **dadurch gekennzeichnet, dass** der Anpressdruck der Saug-Presswalze (41) respektive der Rakel (7) beim Applizieren der Schutzfolie (3, 3.1, 3.2) auf einen vorgegebenen Wert einstellbar und/oder regelbar ist.

## Claims

1. Method for covering a plate, in particular an insulating glass element (2), with protective film (3, 3.1, 3.2), **characterized in that** a plurality of protective films (3, 3.1, 3.2) in film strips of different widths are applied to the plate in an overlapping manner by a plurality of film application devices (4. 4.1, 4.2) mounted such that they can be displaced transversely and longitudinally with respect to the plate.

2. Method according to Claim 1, **characterized in that**, by means of the positioning of the protective films in the transverse direction of the film strips and by means of suitably placing, applying and cutting off the protective films in the longitudinal direction of the film strips, an edge region of the plate is left free.

3. Method according to either of Claims 1 and 2, **characterized in that** an overlap region of the film strips is chosen in accordance with the dimensions of the plate.

4. Method according to one of Claims 1 to 3, **characterized in that** the application of the protective films to the plate comprises a relative movement of the plate in the film strip direction, based on a fixed point.

5. Assembly for covering a plate, in particular an insulating glass element (2), with protective film (3, 3.1, 3.2), **characterized in that** a plurality of film application devices (4, 4.1, 4.2) are mounted such that they can be displaced transversely and longitudinally with respect to the plate, in order to apply a plurality of film strips with removable protective film (3, 3.1, 3.2) of different width to the plate in an overlapping manner.

6. Assembly according to Claim 5, **characterized in that** a film application device (4, 4.1, 4.2) has a roll of film (44) and a suction press roll (41), a protective film (3, 3.1, 3.2) being guided from the roll of film to the suction press roll (41) and held by the latter for the application of the protective film (3, 3.1, 3.2) to the plate.

7. Assembly according to Claim 6, **characterized in that** a film application device (4, 4.1, 4.2) has a cutting device (46) in order to sever the protective film (3, 3.1, 3.2) between the roll of film (44) and the suction press roll (41).

8. Assembly according to either of Claims 6 and 7, **characterized in that** a film application device (4, 4.1, 4.2) has a film guide (45) in order to hold the protective film (3, 3.1, 3.2) for the severing and/or in order to feed the protective film (3, 3.1, 3.2) from the roll of film (44) to the suction press roll (41) over a stabilizing air cushion.

9. Assembly according to Claim 5, **characterized in that** a film application device (4, 4.1, 4.2) has a roll of film (44), a deflection roller (6) and a doctor (7) that can be moved with respect to the surface of the plate, a protective film (3, 3.1, 3.2) being guided from the roll of film over the deflection roller (6) to the doctor (7) for the application of the protective film (3, 3.1, 3.2) to the plate.

10. Assembly according to Claim 9, **characterized in that** the doctor (7) has a replaceable support (71) with a resilient underlayer (72) placed thereon and having a low-friction, wear-resistant edge guard (73).

11. Assembly according to Claim 10, **characterized in that** the doctor sliding surface is provided with drilled holes (74), through which an air stream can be led optionally as a suction flow or as a blowing flow, in the case of a suction flow the protective film (3, 3.1, 3.2) being held on the resilient underlayer (72) and adhering in order to be cut, and in the case of a blowing flow, the protective film (3, 3.1, 3.2) sliding without friction during the application.

12. Assembly according to one of Claims 9 to 11, **characterized in that** a film knife (8) is provided, which can be moved along the doctor (7) in order to cut through the protective film (3, 3.1, 3.2) along the tip of the doctor.

13. Assembly according to one of Claims 9 to 12, **characterized in that** the deflection roller (6) is a spreader roll.

14. Assembly according to one of Claims 5 to 13, **characterized in that** a braking device is provided in order to brake the roll of film (44) with an adjustable torque.

15. Assembly according to one of Claims 5 to 14, **characterized in that** the suction pressure roll (41) or the doctor (7) of a film application device (4, 4.1, 4.2) can be displaced in a vertical direction relative to the surface of the plate, so that the suction press roll (41) or the doctor can be placed on the surface of the plate and removed from the latter.

16. Assembly according to one of Claims 5 to 15, **characterised in that** film application devices (4, 4.1, 4.2) are arranged on opposite sides of the plate, so that the plate can be covered with protective film (3, 3.1, 3.2) on both sides.

17. Assembly according to one of Claims 5 to 16, **characterized in that** the suction press roll (41) or the doctor (7) is arranged such that it can be swung with respect to the plate surface with its entire film application device (4, 4.1, 4.2).

18. Assembly according to one of Claims 5 to 17, **characterized in that** the contact pressure of the suction press roll (41) or the doctor (7) during application of the protective film (3, 3.1, 3.2) can be adjusted and/or controlled to a predefined value.

## Revendications

1. Procédé de recouvrement d'une plaque, en particulier d'un élément de verre isolant (2), avec une feuille de protection (3, 3.1, 3.2), **caractérisé en ce que** l'on applique plusieurs feuilles de protection (3, 3.1, 3.2) en bandes de feuille de largeur différente avec chevauchement sur la plaque avec plusieurs dispositifs d'application de feuille (4, 4.1, 4.2) montés de façon déplaçable en direction transversale et longitudinale par rapport à la plaque.

2. Procédé selon la revendication 1, **caractérisé en ce que** l'on laisse libre une zone de bord de la plaque par le positionnement des feuilles de protection en direction transversale des bandes de feuille ainsi que par une pose, une application et une découpe appropriées des feuilles de protection dans la direction longitudinale des bandes de feuille.

3. Procédé selon l'une des revendications 1 ou 2, **caractérisé en ce que** l'on choisit une zone de chevauchement des bandes de feuille en fonction des dimensions de la plaque.

4. Procédé selon l'une quelconque des revendications 1 à 3, **caractérisé en ce que** l'application des feuilles de protection sur la plaque comprend un mouvement relatif de la plaque dans la direction de la bande de feuille, par rapport à un point fixe.

5. Agencement de recouvrement d'une plaque, en particulier d'un élément de verre isolant (2), avec une feuille de protection (3, 3.1, 3.2), **caractérisé en ce que** plusieurs dispositifs d'application de feuille (4, 4.1, 4.2) sont montés de façon déplaçable en direction transversale et longitudinale par rapport à la plaque, afin d'appliquer plusieurs bandes de feuille avec une feuille de protection détachable (3, 3.1, 3.2) de largeur différente avec chevauchement sur la plaque.

6. Agencement selon la revendication 5, **caractérisé en ce qu'**un dispositif d'application de feuille (4, 4.1, 4.2) présente une bobine de feuille (44) et un rouleau presseur aspirant (41), dans lequel une feuille de protection (3, 3.1, 3.2) est guidée de la bobine de feuille au rouleau presseur aspirant (41) et est maintenue par ce dernier pour l'application de la feuille de protection (3, 3.1, 3.2) sur la plaque.

7. Agencement selon la revendication 6, **caractérisé en ce qu'**un dispositif d'application de feuille (4, 4.1, 4.2) présente un dispositif de coupe (46), destiné à trancher la feuille de protection (3, 3.1, 3.2) entre la bobine de feuille (44) et le rouleau presseur aspirant (41).

8. Agencement selon l'une des revendications 6 ou 7, **caractérisé en ce qu'**un dispositif d'application de feuille (4, 4.1, 4.2) présente un guide-feuille (45), pour maintenir la feuille de protection (3, 3.1, 3.2) en vue de la trancher et/ou pour transférer la feuille de protection (3, 3.1, 3.2) de la bobine de feuille (44) au rouleau presseur aspirant (41) au moyen d'un coussin d'air de stabilisation.

9. Agencement selon la revendication 5, **caractérisé en ce qu'**un dispositif d'application de feuille (4, 4.1, 4.2) présente une bobine de feuille (44), un rouleau de déviation (6) et une racle (7) mobile par rapport à la surface de la plaque, dans lequel une feuille de protection (3,3.1,3.2) est guidée depuis la bobine de feuille jusqu'à la racle (7) par l'intermédiaire du rouleau de déviation (6) pour l'application de la feuille de protection (3, 3.1, 3.2) sur la plaque.

10. Agencement selon la revendication 9, **caractérisé en ce que** la racle (7) présente une base interchangeable (71) avec une base élastique (72) posée sur celle-ci et qui présente une protection d'arête (73) résistante à l'usure et avec un frottement faible.

11. Agencement selon la revendication 10, **caractérisé en ce que** la face de glissement de la racle est munie de perçages (74), à travers lesquels un flux d'air peut être mené au choix sous la forme d'un flux aspirant ou d'un flux soufflant, dans lequel, dans le cas d'un flux aspirant, la feuille de protection (3,3.1,3.2) est maintenue et adhère sur la base élastique (72) pour la coupe et dans lequel, dans le cas d'un flux soufflant, la feuille de protection (3, 3.1, 3.2) glisse sans frottement pendant l'application.

12. Agencement selon l'une quelconque des revendications 9 à 11, **caractérisé en ce qu'**il est prévu un coupe-feuille (8), qui est déplaçable le long de la racle (7), pour trancher la feuille de protection (3, 3.1, 3.2) le long du sommet de la racle.

13. Agencement selon l'une quelconque des revendications 9 à 12, **caractérisé en ce que** le rouleau de déviation (6) est un rouleau élargisseur.

14. Agencement selon l'une quelconque des revendications 5 à 13, **caractérisé en ce qu'**il est prévu un dispositif de frein, pour freiner la bobine de feuille (44) avec un couple de rotation réglable.

15. Agencement selon l'une quelconque des revendications 5 à 14, **caractérisé en ce que** le rouleau presseur aspirant (41) respectivement la racle (7) d'un dispositif d'application de feuille (4, 4.1, 4.2) sont déplaçables dans une direction perpendiculaire par rapport à la surface de la plaque, de telle manière que le rouleau presseur aspirant (41) respectivement la racle puisse être posé(e) sur la surface de la plaque et écarté(e) de celle-ci.

16. Agencement selon l'une quelconque des revendications 5 à 15, **caractérisé en ce que** des dispositifs d'application de feuille (4, 4.1, 4.2) sont disposés sur des côtés opposés de la plaque, de telle manière que la plaque puisse être recouverte avec une feuille de protection (3, 3.1, 3.2) sur les deux côtés.

17. Agencement selon l'une quelconque des revendications 5 à 16, **caractérisé en ce que** le rouleau presseur aspirant (41) respectivement la racle (7) est disposé(e), avec tout son dispositif d'application de feuille (4, 4.1, 4.2), de façon oscillante par rapport à la surface de la plaque.

18. Agencement selon l'une quelconque des revendications 5 à 17, **caractérisé en ce que** la pression d'application du rouleau presseur aspirant (41) respectivement de la racle (7) lors de l'application de la feuille de protection (3, 3.1, 3.2) peut être réglée et/ou régulée à une valeur prédéterminée.
